# DEMANDE DE BREVET EUROPEEN

(11) **EP 0 715 109 A1**
(43) Date de publication de la demande: **05.06.1996**
(21) Numéro de dépôt: 95420337.8
(22) Date de dépôt: 29.11.1995
(51) Int. Cl.: F16K 31/08

(54) **Vanne commandée par un fluide**

(30) Priorité: 02.12.1994 FR 9414741
(71) Demandeur: EATON S.A.M., MC-98000 Monaco (MC)
(72) Inventeur: Buffet, Jean Claude, F-06380 Sospel (FR); Raur, Liones, F-06500 Menton (FR)
(74) Mandataire: Bratel, Gérard

(57) **Abrégé**

La vanne, notamment à commande pneumatique, comprend un corps (1) avec un passage (2) pour un fluide liquide ou gazeux, une membrane annulaire souple (7) déplaçable entre une position d'obturation et une position de libération du passage (2), un insert de pilotage (11) avec trou central (12), et un joint mobile (16) coopérant avec l'insert (11) dans la région du trou (12). Un aimant mobile central (14) est lié au joint (16), et couplé magnétiquement à un aimant annulaire (17) disposé coaxialement, à hauteur de l'aimant central (14) dont il est séparé par une cloison étanche (8,10). L'aimant annulaire (17) est inséré dans une autre membrane (18), soumise à un ressort de rappel (20) et délimitant un volume annulaire (23) dans lequel est admis (en 22) un fluide de commande, dont la pression (P) agit sur la membrane (18) pour déplacer l'aimant annulaire (17).

Application : machines à laver le linge ou la vaisselle.

## Description

La présente invention concerne une vanne commandée par un fluide, notamment une vanne à commande pneumatique, permettant d'ouvrir ou de fermer un passage de liquide ou de gaz à partir de l'information donnée par une pression de fluide. Plus particulièrement, cette vanne appartient au genre comprenant un corps de vanne avec un passage pour un fluide principal liquide ou gazeux, une membrane annulaire souple déplaçable entre une position d'obturation et une position de libération dudit passage, un insert de pilotage fixé dans la partie centrale de la membrane annulaire et comportant un trou central, tandis que la membrane annulaire présente au moins un trou latéral, un joint mobile coopérant avec l'insert, dans la région du trou central, et lié à un noyau mobile axialement, et des moyens de commande du déplacement axial du noyau mobile en réponse à une information extérieure.

Les vannes de ce genre, dites "vannes pilotées", sont généralement des électrovannes, dont le noyau mobile est déplacé, au moins dans un sens, sous l'effet du champ magnétique d'un solénoïde. Ce type de vanne, utilisant pour son fonctionnement un courant électrique, nécessite des conducteurs électriques d'alimentation du solénoïde et nécessite aussi une isolation électrique compliquée et coûteuse, notamment dans des applications telles que les machines à laver le linge ou la vaisselle.

On connaît aussi des vannes du genre concerné, dont la commande est assurée non pas par un solénoïde, mais par un aimant permanent mobile, porté par une membrane déformable sous l'effet de la pression d'un fluide de commande, généralement de l'air. Le noyau de la vanne est constitué par une simple pièce métallique qui est déplaçable, par couplage magnétique, selon la position prise par l'aimant permanent mobile, une pièce étanche en matière plastique séparant l'aimant du noyau mobile. Ce dernier comporte un ressort de rappel, agissant dans le sens de la fermeture de la vanne.

Ces dernières vannes utilisent habituellement, en ce qui concerne leur principe magnétique, une disposition dite à entrefer parallèle, telle que lorsque la vanne est fermée, le noyau mobile se trouve éloigné de l'aimant qui, alors, ne peut provoquer la réouverture de la vanne du fait que l'entrefer (entre aimant et noyau mobile) est devenu trop important, le couplage magnétique devenant donc trop faible pour permettre l'attraction du noyau mobile. Ainsi, dans l'application aux machines à laver, le dispositif n'assure que la fonction de fermeture de la vanne en cas de fuite ou de débordement.

La présente invention vise à éviter ces inconvénients, en fournissant pour une vanne commandée par un fluide, du genre ici concerné, un dispositif de commande par fluide, utilisant une disposition nouvelle des aimants qui procure des performances supérieures, en permettant notamment l'ouverture et la fermeture de la vanne à des pressions élevées du fluide principal la traversant, et en permettant la réouverture automatique de la vanne tout en supprimant l'habituel ressort de rappel agissant sur le noyau mobile.

A cet effet, dans la vanne commandée par un fluide objet de la présente invention, les moyens de commande comprennent essentiellement un aimant permanent central constituant le noyau mobile et lié mécaniquement au joint mobile coopérant avec l'insert de pilotage, et un aimant annulaire disposé coaxialement à l'aimant central, sensiblement à hauteur de cet aimant central dont il est séparé par une cloison étanche, l'aimant annulaire étant déplaçable axialement, à l'encontre de moyens de rappel, sous l'effet de la pression d'un fluide de commande admis dans un volume séparé du passage du fluide principal par ladite cloison, et agissant sur un élément mobile et/ou déformable lié à l'aimant annulaire.

Ainsi, l'invention propose une combinaison de deux aimants, l'un intérieur et l'autre extérieur, montés de façon coaxiale dans un faible encombrement, tout en permettant des performances supérieures aux vannes connues utilisant des aimants disposés de façons différentes, généralement avec disposition à entrefer parallèle, la disposition coaxiale proposée par l'invention procurant des forces magnétiques beaucoup plus élevées que les dispositions à entrefer parallèle. En particulier, une vanne conforme à l'invention peut ainsi fonctionner à des pressions d'ouverture ou de fermeture égales ou supérieures à 10 bars. De plus, du fait de la position relative rapprochée des deux aimants, le champ magnétique assure la pression d'application nécessaire à la fermeture étanche du trou central de pilotage de l'insert, en rendant inutile le ressort habituel de fermeture de la vanne. La disposition coaxiale des aimants, permettant à l'aimant annulaire extérieur de demeurer à proximité de l'aimant central, permet aussi une réouverture automatique de la vanne.

Du fait de la disposition coaxiale des aimants, la quantité de matière magnétique est réduite, et l'encombrement du dispositif est lui aussi diminué du fait de cette disposition coaxiale.

Bien entendu, la solution proposée par la présente invention évite aussi l'utilisation de courant électrique nécessitant une isolation compliquée et coûteuse.

Dans l'ensemble, la vanne à commande pour fluide objet de l'invention est donc de réalisation simple, compacte et économique, tout en présentant un fonctionnement amélioré dans le sens de la fiabilité, de l'automaticité et de la précision.

Selon un mode de réalisation préféré de cette vanne commandée par un fluide, l'aimant annulaire est inséré dans une membrane en forme de cloche, délimitant un volume annulaire dans lequel est admis le fluide de commande. Ainsi cette membrane (distincte de la membrane annulaire liée à l'insert de pilotage) est déformée et/ou déplacée, avec l'aimant annulaire qu'elle supporte, sous l'effet de la pression du fluide de commande.

Dans un mode de réalisation, la membrane en forme de cloche est soumise à l'effet d'un ressort de rappel, agissant dans le sens du déplacement de l'aimant annulaire en direction du corps de vanne, tandis que l'admission du fluide de commande sous pression dans le volume annulaire précité déforme cette membrane de manière à déplacer l'aimant annulaire dans le sens de son éloignement du corps de vanne.

Selon une forme d'exécution particulière, le volume annulaire précité est délimité par une pièce séparatrice pourvue d'une partie cylindrique extérieure, comportant un embout de raccordement à une arrivée de fluide de commande, et d'une partie cylindrique intérieure, qui est entourée coaxialement par l'aimant annulaire inséré dans la membrane en forme de cloche, et qui entoure et guide l'aimant central lié à l'insert de pilotage.

En ce qui concerne la polarisation des aimants permanents, selon une première possibilité, les faces terminales correspondantes (c'est-à-dire tournées du même côté) de l'aimant central et de l'aimant annulaire possèdent des polarités inverses, de sorte que le déplacement de l'aimant annulaire, dans un sens sous l'effet de la pression du fluide de commande et dans le sens opposé sous l'action des moyens de rappel, s'accompagne par effet d'attraction magnétique de déplacements de même sens de l'aimant central, donc de l'insert de pilotage.

Selon une autre possibilité, les faces terminales correspondantes de l'aimant central et de l'aimant annulaire possèdent des polarités identiques, de sorte que le déplacement de l'aimant annulaire, dans un sens sous l'effet de la pression du fluide de commande et dans le sens opposé sous l'action des moyens de rappel, s'accompagne par effet de répulsion magnétique de déplacements de sens inverse de l'aimant central, donc de l'insert de pilotage.

Ce dernier principe de fonctionnement magnétique, créant un effet de "basculement", conduit à un fonctionnement plus précis en ce qui concerne la valeur critique de la pression du fluide de commande, provoquant l'ouverture ou la fermeture de la vanne.

En utilisant plus particulièrement ce dernier principe de fonctionnement à basculement, une vanne conforme à la présente invention est applicable entre autres dans une machine à laver le linge ou la vaisselle, en tant que vanne de remplissage placée sur l'alimentation en eau de la machine à laver et commandant automatiquement l'interruption de l'arrivée d'au, la pression du fluide de commande de cette vanne étant liée à la hauteur d'eau dans la cuve de la machine à laver.

De toute façon, l'invention sera mieux comprise à l'aide de la description qui suit, en référence au dessin schématique annexé représentant, à titre d'exemple, une forme d'exécution de cette vanne commandée par un fluide :
Figure 1 est une vue en coupe d'une vanne à commande pneumatique conforme à la présente invention, en position de fermeture ;
Figure 2 est une vue en coupe de la vanne de figure 1, en position d'ouverture ;
Figure 3 est un schéma illustrant un principe de fonctionnement magnétique de cette vanne ;
Figure 4 est un schéma illustrant un autre principe de fonctionnement magnétique applicable à la vanne objet de l'invention.

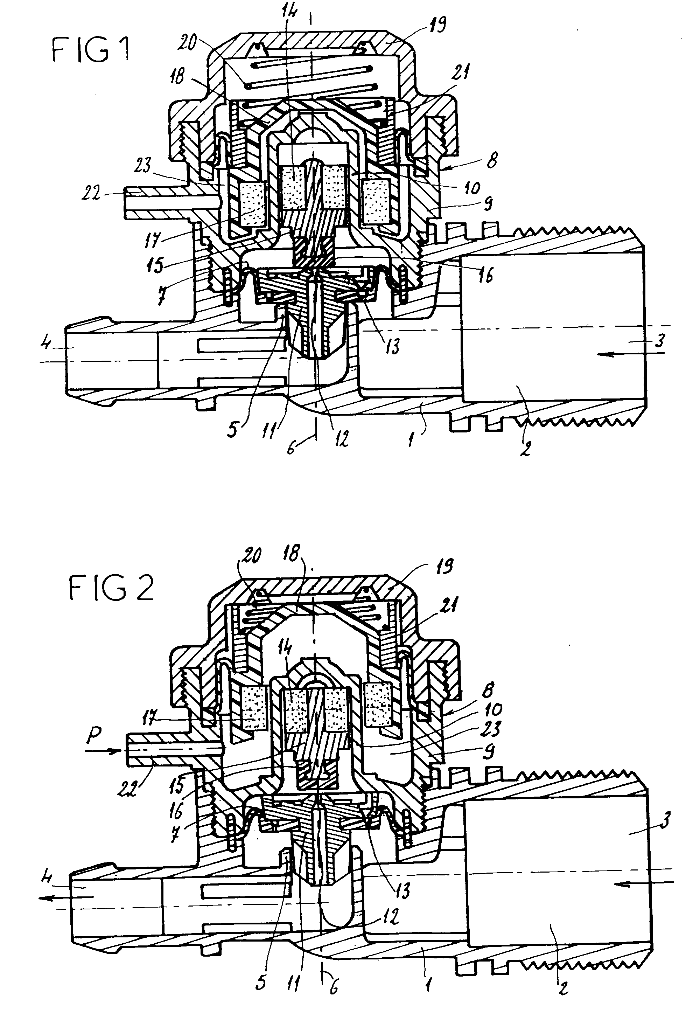

Les figures 1 et 2 montrent la constitution d'une vanne à commande pneumatique, conforme à la présente invention.

La vanne comprend un corps de vanne 1, dans lequel est ménagé un passage de fluide principal 2, notamment un passage de liquide, s'étendant entre une entrée de fluide 3 et une sortie de fluide 4. Sur le passage de fluide 2 est formé un siège annulaire 5, dont l'axe 6 est perpendiculaire à la direction générale du passage 2. Une membrane annulaire souple 7 coopère avec le siège 5, pour obturer ou libérer le passage 2.

La périphérie de la membrane annulaire 7 est immobilisée entre le corps de vanne 1, d'une part, et une pièce séparatrice 8, d'autre part, la pièce 8 possédant une partie cylindrique extérieure 9 et une partie cylindrique intérieure 10, coaxiales entre elles et ayant pour axe commun l'axe 6 précité.

La partie centrale de la membrane annulaire 7 est solidarisée avec un insert de pilotage 11, monté mobile en translation suivant l'axe 6 et comportant un trou central 12.

La membrane annulaire 7 présente encore un trou latéral 13, de section inférieure à celle du trou central 12.

Dans la partie cylindrique intérieure 10 de la pièce séparatrice 8 est monté coulissant (dans la direction de l'axe 6) un aimant permanent central 14, de forme générale cylindrique, équipé d'un porte-joint 15 qui est lui-même pourvu d'un joint 16, tourné vers l'insert de pilotage 11.

Autour de la partie cylindrique intérieure 10 de la pièce 8 est disposé un aimant permanent annulaire 17, monté coulissant (dans la direction de l'axe 6) et inséré dans une autre membrane 18, en forme de cloche.

La pièce séparatrice 8 est surmontée d'un couvercle 19, et la périphérie de la dernière membrane 18 se trouve immobilisée entre la paroi cylindrique extérieure 10 de cette pièce 8 et le couvercle 19. Un ressort hélicoïdal 20, logé sous le couvercle 19, prend appui d'une part contre le fond du couvercle 19 et d'autre part sur un porte-ressort annulaire 21, lui-même appuyé conre un épaulement de la membrane 18.

La paroi cylindrique extérieure 9 de la pièce 8 comporte un embout 22, débouchant dans le volume annulaire 23 existant entre cette paroi 9 et la membrane 18.

Pour son utilisation, la vanne est insérée dans un réseau de fluide principal, par exemple d'eau, admise par l'entrée de fluide 3 et s'échappant par la sortie de fluide 4. L'embout 22 est raccordé à une source d'air sous pression. La pièce séparatrice 8 isole de façon étanche, à l'intérieur de la vanne, la partie recevant le fluide principal de la partie recevant le fluide de commande, ici de l'air sous pression.

La vanne est normalement fermée, c'est-à-dire qu'en l'absence de pression d'air au niveau de l'embout 22, la membrane annulaire 7 est appliquée contre le siège 5 et obture le passage de fluide 2 (voir figure 1).

En effet, en l'absence de pression dans l'embout 22, le ressort hélicoïdal 20 est détendu et, par l'intermédiaire du porte-ressort 21, il repousse la membrane 18 et l'aimant annulaire 17, qui se trouve alors le plus près possible du corps de vanne 1.

Le couplage magnétique maintient alors aussi l'aimant central 14 dans sa position la plus proche du corps de vanne 1, provoquant l'obturation du trou de pilotage 12 de l'insert 11 par le joint 16, et maintenant la membrane annulaire 7 appliquée sur le siège 5. Plus précisément, l'obturation du trou 12 a pour effet d'équilibrer les pressions sur les deux faces de la membrane 7 ; celle-ci ferme alors le passage de fluide 2 du fait de la dépression créée sur sa face inférieure par le débit de fluide dans ce passage 2 sous effet de vortex, et grâce à la force de l'aimant central 14 exercée par l'intermédiaire du joint 16.

La disposition relative des deux aimants 14 et 17 maintient la pression d'application du joint 16 nécessaire à l'obturation du trou central 12, sans nécessité d'un ressort.

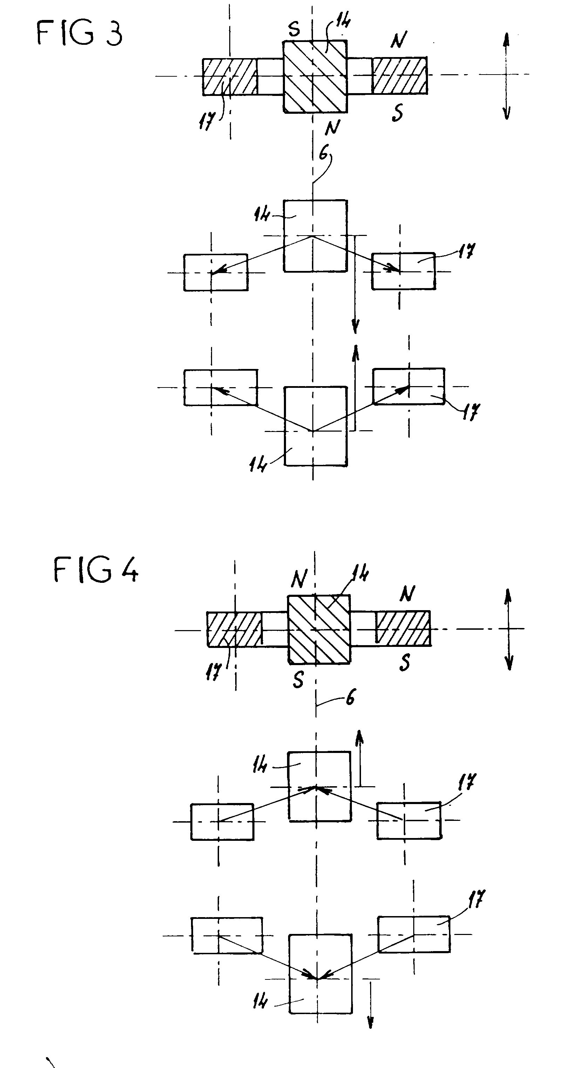

Plus particulièrement, le principe de fonctionnement magnétique de la vanne peut être celui illustré par la figure 3. L'aimant central 14 possède des polarités N et S respectivement sur ses deux faces terminales circulaires, tandis que l'aimant annulaire 17 possède des polarités inverses S et N sur ses deux faces annulaires correspondantes. La partie supérieure de la figure montre la position relative d'équilibre des deux aimants 14 et 17. Le déplacement de l'aimant annulaire 17 vers le bas provoque l'attraction de l'aimant central 14 vers le bas, comme indiqué dans la partie centrale de la figure, ce qui correspond à la position de fermeture de la vanne illustrée sur la figure 1.

Lorsqu'une pression d'air P est présente au niveau de l'embout 22, l'air admis dans le volume annulaire 23 provoque la déformation de la membrane 18 et son déplacement en direction du fond du couvercle 19, le porte-ressort 21 étant aussi déplacé et le ressort hélicoïdal 20 se comprimant - voir figure 2.

L'aimant annulaire 17, qui suit nécessairement le déplacement de la membrane 18, s'éloigne alors du corps de vanne 1 et, par effet d'attraction, l'aimant central 14 est déplacé dans le même sens - voir aussi la partie inférieure de la figure 3.

Le joint 16 se sépare alors de la membrane annulaire 7 et libère le trou central 12 de l'insert 11. Ceci a pour effet de créer une différence de pression entre les faces supérieure et inférieure de la membrane 7, différence de pression qui résulte elle-même du rapport entre la section du trou central 12 et la section du trou latéral 13 (le fait que le trou central 12 soit de plus grande section que le trou latéral 13 provoque une perte de charge hydraulique qui crée la différence de pression entre les deux faces de la membrane). La membrane 7 se déplace alors de façon à libérer le passage d'eau 2.La vanne atteint ainsi sa position d'ouverture (figure 2).

Dès la disparition de la pression d'air au niveau de l'embout 22, par l'effet du ressort 20 et du porte-ressort 21, l'aimant annulaire 17 et l'aimant central 14 sont ramenés dans leur position initiale, provoquant ainsi la fermeture de la vanne par obturation du trou de pilotage 12 de l'insert 11.

Le principe de fonctionnement magnétique de la vanne, indiqué par la figure 3, peut être remplacé par celui schématisé sur la figure 4, utilisant l'effet de répulsion au lieu de l'attraction magnétique. L'aimant central 14 possède des polarités N et S respectivement sur ses deux faces terminales circulaires, tandis que l'aimant annulaire 17 possède des polarités N et S identiques (et non plus inverses) sur ses deux faces annulaires correspondantes. La partie supérieure de la figure montre la position relative d'équilibre des deux aimants 14 et 17. Le déplacement de l'aimant annulaire 17 vers le bas provoque, par effet de répulsion, un déplacement de l'aimant central 14 vers le haut, comme indiqué dans la partie centrale de la figure. Au contraire, lors d'un déplacement de l'aimant annulaire 17 vers le haut, l'aimant central 14 est repoussé vers le bas - voir la partie inférieure de la figure. Dans ce dernier cas, le système est inversé : la pression d'air provoque la fermeture de la vanne, et non plus son ouverture.

La commande pneumatique de la vanne peut être réalisée à partir d'une pompe à air, ou de toute autre moyen générant une pression d'air au niveau de l'embout 22.

La vanne commandée par un fluide, qui vient d'être décrite, est applicable entre autres dans les machines à laver le linge ou la vaisselle, où elle peut se substituer aux dispositifs existants dits pressostats, qui par mesure de la hauteur d'eau dans la cuve de la machine ouvrent ou ferment un contact électrique commandant une électrovanne de remplissage de la machine à laver. Dans ce cas, la vanne objet de la présente invention est raccordée, par son embout 22, à la colonne d'eau créée par le niveau d'eau dans la cuve de la machine à laver, avec interposition d'une colonne d'air transmettant la pression d'eau. La vanne ainsi utilisée présente notamment l'avantage de permettre une réouverture automatique du passage d'eau, comme le ferait une électrovanne associée à un pressostat, ce que ne permettent pas les vannes à aimant permanent actuellement connues, en raison de leur mauvais couplage magnétique.

Comme il va de soi, l'invention ne se limite pas à la seule forme d'exécution de cette vanne commandée par un fluide qui a été décrite ci-dessus, à titre d'exemple ; elle en embrasse, au contraire, toutes les variantes de réalisation et d'application respectant le même principe. C'est ainsi, notamment, que l'on ne s'éloignerait pas du cadre de l'invention par des modifications du détail des formes des composants de la vanne, ou par le remplacement de l'air par un liquide, tel que de l'eau, en tant que fluide de commande.

## Revendications

1. Vanne commandée par un fluide, notamment vanne à commande pneumatique, comprenant un corps de vanne (1) avec un passage (2) pour un fluide principal liquide ou gazeux, une membrane annulaire souple (7) déplaçable entre une position d'obturation et une position de libération dudit passage (2), un insert de pilotage (11) fixé dans la partie centrale de la membrane annulaire (7) et comportant un trou central (12), tandis que la membrane annulaire (7) présente au moins un trou latéral (13), un joint mobile (16) coopérant avec l'insert (11), dans la région du trou central (12), et lié à un noyau (14,15) mobile axialement, et des moyens de commande du déplacement axial du noyau mobile (14,15) en réponse à une information extérieure (P), caractérisée en ce que les moyens de commande comprennent un aimant permanent central (14) constituant le noyau mobile et lié mécaniquement au joint mobile (16) coopérant avec l'insert de pilotage (11), et un aimant permanent annulaire (17), disposé coaxialement à l'aimant central (14), sensiblement à hauteur de cet aimant central (14) dont il est séparé par une cloison étanche (8,10), l'aimant annulaire (17) étant déplaçable axialement, à l'encontre de moyens de rappel (20,21), sous l'effet de la pression (P) d'un fluide de commande admis (en 22) dans un volume (23) séparé du passage (2) du fluide principal par ladite cloison (8,10), et agissant sur un élément mobile et/ou déformable (18) lié à l'aimant annulaire (17).

2. Vanne commandée par un fluide selon la revendication 1, caractérisée en ce que l'aimant annulaire (17) est inséré dans une membrane en forme de cloche (18), délimitant un volume annulaire (23) dans lequel est admis (en 22) le fluide de commande.

3. Vanne commandée par un fluide selon la revendication 2, caractérisée en ce que la membrane en forme de cloche (18) est soumise à l'effet d'un ressort de rappel (20), agissant dans le sens du déplacement de l'aimant annulaire (17) en direction du corps de vanne (1), tandis que l'admission (en 22) du fluide de commande sous pression dans le volume annulaire précité (23) déforme ladite membrane (18) de manière à déplacer l'aimant annulaire (17) dans le sens de son éloignement du corps de vanne (1).

4. Vanne commandée par un fluide selon la revendication 2 ou 3, caractérisée en ce que le volume annulaire précité (23) est délimité par une pièce séparatrice (8) pourvue d'une partie cylindrique extérieure (9), comportant un embout (22) de raccordement à une arrivée de fluide de commande, et d'une partie cylindrique intérieure (10), qui est entourée coaxialement par l'aimant annulaire (17) inséré dans la membrane en forme de cloche (18), et qui entoure et guide l'aimant central (14) lié à l'insert de pilotage (11).

5. Vanne commandée par un fluide selon l'une quelconque des revendications 1 à 4, caractérisée en ce que les faces terminales correspondantes de l'aimant central (14) et de l'aimant annulaire (17) possèdent des polarités inverses (N ou S), de sorte que le déplacement de l'aimant annulaire (17), dans un sens sous l'effet de la pression (P) du fluide de commande et dans le sens opposé sous l'action des moyens de rappel (20,21), s'accompagne par effet d'attraction magnétique de déplacements de même sens de l'aimant central (14), donc de l'insert de pilotage (11).

6. Vanne commandée par un fluide selon l'une quelconque des revendications 1 à 4, caractérisée en ce que les faces terminales correspondantes de l'aimant central (14) et de l'aimant annulaire (17) possèdent des polarités identiques (N ou S), de sorte que le déplacement de l'aimant annulaire (17), dans un sens sous l'effet de la pression (P) du fluide de commande et dans le sens opposé sous l'action des moyens de rappel (20,21), s'accompagne par effet de répulsion magnétique de déplacements de sens inverse de l'aimant central (14), donc de l'insert de pilotage (11).

7. Vanne commandée par un fluide selon l'une quelconque des revendications 1 à 6, caractérisée en ce qu'elle est utilisée dans une machine à laver le linge ou la vaisselle, en tant que vanne de remplissage placée sur l'alimentation en eau de la machine à laver et commandant automatiquement l'interruption de l'arrivée d'eau, la pression (P) du fluide de commande de cette vanne étant liée à la hauteur d'eau dans la cuve de la machine à laver.
